# EUROPEAN PATENT SPECIFICATION

(11) **EP 3 851 471 B1**
(45) Date of publication and mention of the grant of the patent: **26.08.2026**
(21) Application number: 20460001.9
(22) Date of filing: 16.01.2020
(51) Int. Cl.: C08G 18/42, C08G 63/60, C08G 63/78

(54) **METHOD FOR OBTAINING HIGH FLAME RETARDANCY POLYESTER POLYOLS**
VERFAHREN ZUR HERSTELLUNG VON SCHWER ENTFLAMMBAREN POLYESTERPOLYOLEN
PROCÉDÉ PERMETTANT D'OBTENIR DES POLYOLS DE POLYESTER À HAUT NIVEAU D'ININFLAMMABILITÉ

(43) Date of publication of application: 21.07.2021
(73) Proprietor: Purinova Spólka z o.o., 85-719 Bydgoszcz (PL)
(72) Inventor: Pienkowska, Marta, 85-676 Bydgoszcz (PL); Korzeniowski, Lukasz, 33-111 Koszyce Male (PL); Korzeniowski, Krzysztof, 00-505 Warszawa (PL); Gawel, Grzegorz, 85-162 Bydgoszcz (PL)
(74) Representative: Karczmitowicz, Teresa Ewa

(56) References cited:
- US-A1- 2013 012 656
- US-A1- 2017 174 830
- TONG S N ET AL: "AROMATIC DIOLS AS CHAIN EXTENDER IN PU REACTION MOLDING", PLASTICS - PIONEERING THE 21ST. CENTURY. LOS ANGELES, MAY 4 - 7, 1987; [PROCEEDINGS OF THE ANNUAL TECHNICAL CONFERENCE (ANTEC)], BROOKFIELD, SOC. OF PLASTICS ENGINEERS, US, vol. CONF. 45, no. 1987, 4 May 1987 (1987-05-04), pages 442 - 445, XP000040189

## Description

The invention relates to a method for obtaining high flame retardancy polyester polyols, to be used especially as a raw material for the production of polyurethanes of various types and applications, where side products from the cyclohexane oxidation process are used as a base for the production of high flame retardancy polyester polyols.
Preferably, high flame retardancy polyester polyols may be used to produce polyurethane and polyisocyanurate rigid foam, solid and microporous elastomers, adhesives and binders.

Use is known from literature of side products of cyclohexane oxidation as a raw material for the synthesis of polyester polyols obtained by way of polycondensation, further used in the production of polyurethanes When washing raw products of cyclohexane oxidation with water, a side product containing a mixture of carboxylic acids apart from water is produced. This product can be used as waste for combustion, generating a certain energy value, but using it as a raw material in the production process of polyester polyols allows for reducing the consumption of raw materials conventionally used in the production of polyester polyols, derived from petroleum.

Streams from cyclohexane oxidation may be divided into several types based on how they are separated, including the following: a stream from washing cyclohexane oxidation products with water to extract cyclohexyl peroxide or a stream produced by washing cyclohexane oxidation products with water. Subsequently, the cyclohexane oxidation product stream may be subjected to purification processes such as distillation, steam distillation [PL162632(B1)], distillation in the presence of phosphoric acid [PL193760(B1)]. Polyhydroxyl alcohols are added and the mixture is further heated under atmospheric or reduced pressure. The product may also contain other bicarboxylic compounds, acids and anhydrides thereof.

For example, Polish patent description no. PL 211684(B1) discloses a method for preparing polyester polyols from side product streams of cyclohexane oxidation. The raw material for syntheses used was a mixture of acids containing 25 to 35% w/w of 6-hydroxycaproicaproic acid and oligomers thereof, 20 to 30% w/w of adipic acid, 3 to 6% w/w of glutaric acid, 3 to 5% w/w of succinic, caproic and valeric acids, 25 to 30% w/w of ketoacids and cyclohexanone dimers and 10 to 20% w/w of water separated by washing the raw cyclohexane oxidation product leaving the oxidation reactor and concentrating the water extract up to 80 to 90% by diaphragm water evaporation while removing volatile compounds. A mixture of aliphatic acids having 4 to 6 carbon atoms in the molecule, hydroxycaproic acid and oligomers thereof, ketoacids, cyclohexanone dimers and other heavy compounds and water were heated at the temperature of 135 to 185°C under atmospheric pressure (1013 hPa) under inert gas to remove water and volatile substances. Then, after the addition of polyhydroxyl alcohols, heating was continued at the temperature of 160 to 220°C in the presence of inert gas, removing condensation water and gradually reducing the pressure to a level below 1013 hPa until the acid value below 2 mg KOH/g and the hydroxyl value from 60 mg KOH/g to 600 mg KOH/g was reached.

Published US Patent Application no.US2017/174830(A1), as analog patent of Polish Patent no. PL229712(B1) describes a method for obtaining polyester resins from a side product of cyclohexane oxidation, characterised by the type of side product stream. Said stream is prepared by way of pre-separation, separating the part of the stream containing heavy fractions and obtaining a purified stream having 30 to 80% water content. For this purpose, the mixture is cooled to 50 to 95°C, expanded to atmospheric pressure, subjected to separation lasting 0.5 to 4h, separating from the bottom a layer of heavy fractions containing 15% w/w of water, and then the water layer containing 30 to 80% w/w of water is concentrated as known.

European patent description no. EP2718340(B1) discloses a process of preparing a polyol composition from side products of cyclohexane oxidation, comprising the following:
(a) heating the side product mixture comprising the following:
   (i) an aqueous extract of the product of the cyclohexane oxidation reaction, optionally concentrated; or
   (ii) non-volatile residues from the cyclohexane oxidation reaction product, optionally concentrated; or a mixture thereof, optionally under reduced pressure or optionally with inert gas flushing to remove monofunctional components and water, followed by
(b) adding one or more polyhydroxyl compounds and optionally a catalyst; optionally under reduced pressure or optionally with inert gas flushing, and after the addition of the one or more polyhydroxyl compounds, the resulting mixture is further heated in order to remove the monofunctional constituents and water by way of distillation.
The residual content of monofunctional compounds after the heating step and removal thereof by way of distillation is 10% or less, or 5% or less, or 2% w/w or less. Monofunctional components include monocarboxylic acids and monohydroxy alcohols. The polyhydroxyl compound comprises (a) diol, triol, tetraol, saccharide or sugar alcohol, or any combination thereof; (b) is ethylene glycol, diethylene glycol, polyethylene glycol, propylene glycol, dipropylene glycol, polypropylene glycol, butanediol, pentanediol, hexanediol, glycerine, trimethylolpropane, pentaerythritol or sorbitol, or a combination thereof. The method according to the invention also comprises the addition to the mixture of a side product, a third component containing a multifunctional acid or activated ester thereof, or its multifunctional ester thereof, or anhydride thereof, or a combination thereof, followed by heating and removal of monofunctional compounds by way of distillation.

Published US Patent Application no.US2013/012656 describes the adhesive composition required to produce the novel heat-resistant polyurethane adhesive can be obtained by incorporation of thermally stable aromatic structures into the polyurethane polymeric skeleton. Adhesive Composition: the heat-resistant wood adhesives derive from an adhesive composition of following components (A), (B), (C) and optionally (D), wherein (A): Polymeric MDI product; (B): Polyether diol, for example: polyethylene glycol with a molecular weight of 400 g/mol; (C): an aromatic diol, such as, a hydroxyl phenol such as, resorcinol or catechol or hydroquinone or mixtures thereof; and optionally (D): a phosphorous-containing polyol flame retardant (FR). For example the composition includes, an aromatic diol that is reacted into polyurethane chains to increase heat-resistance of the polymeric structures. In another embodiment, the aromatic polyol is an aromatic diol, preferably a hydroxyl phenol that includes: a resorcinol, its isomer, catechol, hydroquinone, and combinations thereof. In addition, a phosphorous-containing polyol can optionally be used as reactive flame-retardant to provide the glue line with flame-retardant property.

The publication "Aromatic diols as chain extender in PU reaction molding" (S.N.Tong et al) indicates that , the aromatic diols such as bis (hydroxyethyl) terephthalate, bisphenol A and hydroquinone are used to replace some aliphatic diols commonly used in the conventional PU recipe. Thus formed products are characterized and their mechanical, thermal properties, and dynamic-mechanical properties are investigated. Investigations of morphological changes which are induced in segmented polyurethanes by annealing and quenching are also reported. Due to the high melting point or the high viscosity of the aromatic diols at room temperature, products are prepared by high temperature reaction molding. This system can be performed by modified RIM process so-called high temperature RIM.

It is also known that polyurethanes are flammable materials. Combustion is facilitated by the highly developed pore surface and it is accompanied by the release of fumes and toxic gases. Decomposition products of polyurethanes include, in addition to hydrogen cyanide and carbon monoxide, nitrogen oxides, nitriles, hydrogen chloride, and carbon dioxide. Isocyanate vapours floating above the surface of the polymer being combusted are condensed, while liquid polyols undergo further decomposition.

Polyester polyols are known having increased flame retardancy, which is the result of additives responsible for inhibiting the combustion process, incorporated in the polyester polyol or polyurethane system, or reacted into polyol, used as a polyurethane component. The product may also contain other bicarboxylic compounds, acids and anhydrides thereof. Flame retardancy of polymers may be increased by adding specific chemicals that inhibit or slow down ignition (so-called antipyrenes) and/or mineral fillers, nanofillers or some plasticisers.

For example, the description of Chinese patent no. CN106750211(B) discloses an aromatic polyester polyol with good cyclopentane compatibility and a method of preparation of the aromatic polyester polyol. The method of preparation comprises the following steps: reacting a mixture of dibasic alcohol and trihydroxide alcohol with a mixture of aromatic dibasic acid and aromatic dibasic anhydride, followed by heating, conducting transesterification and subsequent decompression distillation for polycondensation and obtaining an aromatic polyester polyol for use in permanent fire-retardant modification of polyurethane products.

European invention application no. EP 2970571(A4) relates to a composition of polyesters for use in polyurethane and polyisocyanurate foams, and it relates in particular to a composition of polyester polyols.
High flame retardancy aromatic polyester polyols are obtained in the reaction of esterification of naphthalene-based aromatic dibasic acid, binary acid and low molecular alcohol or acid under exposure to a catalyst and antioxidant. The mass ratio of aromatic naphthalene-based di-basic acid to binary acid to small molecular alcohol or acid is (0.7 to 1.5) to (2.8 to 4.6) to (5.7 to 8.6). The average class of a functional group is 2. The acid value is less than 1 mg KOH/g. Average molecular weight is 170 to 300 g/mol, and viscosity is 2500 to4500 mPa.s.

The American invention no. US2018030202 discloses polyester polyols, methods for preparation and uses thereof. Polyols contain repeating units of fermented thermoplastic polyester (e.g. recycled polyethylene terephthalate), a diol, optionally a hydrophobic agent and a clarifying agent chosen from a group consisting of bisphenols, bisphenol alkoxylates, bisphenol polycarbonates, sulphonyl diphenols and diphenol sulfonyl alkoxylates, wherein polyol has a hydroxyl value in the range from 25 to 800 mg KOH/g. The thermoplastic polyethylene is selected from the group comprising polyethylene terephthalate; polybutylene terephthalate; poly(trimethylene terephthalate); glycol-modified polyethylene terephthalate, copolymers of terephthalic acid and 1,4-cyclohexanedimethanol; isophthalic acid-modified copolymers of terephthalic acid and 1,4-cyclohexanedimethanol; copolymers of 2,2,4,4-tetramethyl-1,3-cyclobutanediol with isophthalic acid, terephthalic acid or orthophthalic derivatives; polyhydroxyalkanoates; polyethylene furanate; dihydroferulic acid polymers; and mixtures thereof. The diol is selected from a group comprising ethylene glycol, propylene glycol, 1,3-propanediol, 1,2-butylene glycol, 1,3-butylene glycol, 1,4-butanediol, 2,2,4,4-tetramethyl-1,3-cyclobutanediol, 2-methyl-1,3-propanediol, 1,6-hexanediol, pentaerythritol, sorbitol, neopentyl glycol, glycerol, trimethylolpropane, 3-methyl-1,5-pentanediol, 1,4-cyclohexanedimethanol, 1,3-cyclohexanedimethanol, bisphenol A ethoxylates, diethylene glycol, tetraethylene glycol, dipropylene glycol, triethylene glycol, tripropylene glycol, polyethylene glycols with a number average molecular weight up to approx. 400 g/mol.

It is known that the reaction to fire of polyurethane products is assessed based on such parameters as height of the flame, flame propagation, as well as heat release and smoke emission. The total heat release and the heat release rate are determined by measuring the fire growth rate. The smoke production rate and total amount of smoke produced are also analysed. The course of the combustion process depends on a variety of factors, including the content of elements acting as combustion inhibitors in the solid and gaseous phase (mainly phosphorus, bromine, chlorine), as well as structures formed by the plastic components. According to the state of the art, the mechanism for slowing down combustion may consist in lowering the combustion temperature by way of a radical reaction (acting in the gaseous phase) or in forming structures inhibiting further fire spread (acting in the solid phase).

Accordingly, a technical problem was defined, consisting in preparing a high flame retardancy polyester polyol, while using side products from the cyclohexane oxidation process for the preparation thereof.

The technical problem was overcome by modifying the structure of polyester polyols obtained based on side products of cyclohexane oxidation, with polyhydric phenols containing in their structure at least one aromatic ring and/or having aliphatic substitutes. Moreover, the use of side products allowed for the so-called pre-consumer recycled content according to ISO 14021.

The invention relates to a method for obtaining high flame retardancy polyester polyols using as raw material a side stream from the process of oxidation of cyclohexane subjected to the process of distillation of the volatile parts and water, and then to the process of esterification and polycondensation, where the side streams comprises at least 50% w/w of bifunctional compounds with COOH or OH groups; 5-25% w/w of monocarboxylic compounds, where the remainder are ketones, aldehydes, esters, alcohols, cyclic compounds and derivatives of said groups of compounds and acids, in particular adipic acid, 6-hydroxycaproic acid, 5-oxohexanoic acid, valeric acid, butyric acid, acetic acid, caproic acid, formic acid, succinic acid and propionic acid, which is characterized by the fact that the side product from the cyclohexane oxidation process in the amount of 10 to 80% w/w is subjected to atmospheric distillation at 130 to 185°C to distil some of the volatile compounds and water to a level below 3% w/w, after which at least one polyhydroxyl compound or a mixture of polyhydroxyl compounds is added, containing at least two hydroxyl groups in the molecule, in an amount of 10 to 25% w/w, and at least one aromatic compound or a mixture of aromatic compounds is added that are phenols with at least one aromatic ring in the molecule and/or with aliphatic substitutes, in an amount of 0.5% to 20% w/w and also from 0.1 to 50% w/w of bicarboxylic aliphatic and/or aromatic acids and/or anhydrides thereof, as well as from 0.1 to 15% w/w of vegetable oils, and/or from 0.1 to 15% w/w of fatty acids derived from vegetable oils and the whole is subjected to the process of esterification and polycondensation by heating at the temperature of 160-220°C under atmospheric pressure or preferably a pressure reduced to 90kPa until an acid value of 0 to 5 mg KOH/g and a hydroxyl value of 20 to 400 mg KOH/g is obtained.

According to the invention the polyhydroxyl compounds containing at least two hydroxyl groups in the molecule used are ethylene glycol and/or diethylene glycol and/or 1,4-butanediol and/or 1,2-propanediol and/or 1,3-propanediol and/or 1,6-hexanediol and/or pentaerythritol and/or glycerol. As indicated above total amount of polyhydroxyl compounds is 10 to 25% w/w, wherein each of said compounds may be used separately or in a mixture up to 100% w/w of their total amount used in the process.

The phenols with one or more aromatic rings and/or with aliphatic substitutes used are bisphenol and/or catechol and/or resorcin and/or hydroquinone. As indicated above total amount of phenols is 0.5% to 20% w/w, wherein each of these may be used separately or in a mixture up to 100% w/w of their total amount used in the process.

Bicarboxylic aliphatic and/or aromatic acids and/or anhydrides thereof; vegetable oils and fatty acids derived from vegetable oils (in the amounts specified above) were used to the esterification and polycondensation process in order to modify the properties of polyester polyols, such as viscosity, reactivity, hydrophilic and hydrophobic properties, functionality.
As bicarboxylic aliphatic and/or aromatic acids and/or anhydrides thereof are used adipic acid and/or phthalic acid and/or terephthalic acid and/or phthalic anhydride. Each of these may be used separately or in a mixture up to 100% of the total amount thereof used in the process;
As vegetable oils are used soybean oil and/or, rapeseed oil and/or coconut oil and/or cashew shell oil. Each of these may be used separately or in a mixture up to 100% of the total amount thereof used in the process;
As fatty acids derived from vegetable oils are used stearic acid and/or linoleic acid and/or 12-hydroxystearic acid. Each of these may be used separately or in a mixture up to 100% of the total amount thereof used in the process.

Many studies and laboratory tests showed that fire reactivity is significantly improved if the polyester polyol that is a raw material for the production of polyurethanes is modified during the synthesis with polyols containing at least an aromatic ring and/or with aliphatic substitutes in their structure. These compounds, incorporated in the polymer by way of

The side products of cyclohexane oxidation composed of aliphatic acids form polyols that are primarily aliphatic in structure. It differs, however, from the regular structure of polyester polyols, formed only with adipic acid, due to the presence of various acids, including hydroxy acids as well as esters and alcohols. The research has confirmed a significant improvement in the flame retardancy of polyols prepared using the method of the invention compared to aliphatic polyols based on adipic acid. Incorporation of phenols in the structure of polyol prepared using cyclohexane oxidation products does not reduce the content of components derived from the side product stream of cyclohexane oxidation, as is the case when using aromatic anhydrides or acids. Moreover, there is an increase in aromaticity (and thus in temperature strength) and the formation of new structures of acid esters, which are components of the products of oxidation of cyclohexane with phenols. The resulting structures achieve the desired improved flame retardancy, which is due in particular to the scaling that forms on the surface of the modified polyol.

In the course of the process, phenols are thus incorporated in the polyester chain in the esterification reaction with carboxylic acids that are components of the synthesis process. Both the esterification and the polycondensation reaction occurring between carboxylic acid esters contained in the product of cyclohexane oxidation and polyhydroxyl alcohols and phenols result in water being released as a side product.

As a variant of the invention, the pre-heating step of the side product to remove water and parts of volatile compounds is carried out by steam distillation or in the presence of polyhydroxyl compounds.

Preferably, in order to accelerate the polycondensation process, an organometallic catalyst is added in the form of titanium salts and/or tin salts and/or cobalt salts, preferably tetra-n-butyl titanate and/or tetra-n-butyl zirconate and/or tin octanoate and/or dibutyltin oxide and/or dioctyltin oxide and/or methanesulphonic acid in an amount of no more than 0.5% w/w, wherein each of the above may be used separately or in a mixture up to 100% w/w of their total amount used in the process.

Preferably, in order to improve viscosity, hydrophobic properties, miscibility with other raw materials, to further improve fire reactivity of the polyester polyol prepared using the method of the invention, the following are added:
(1) 0.05 to 10% w/w of non-ionic surfactants as non-silicone, non-ionic surfactants.
(2) 1 to 20% w/w of flame retardants such as 2-chloro-1-methyl ethyl triphosphate and/or triethyl phosphate and/or brominated alcohol, wherein each of these may be used separately or in a mixture up to 100% of their total amount used in the process and other components known in the art of preparing polyester polyols.

Flammability of the polyester polyols was tested according to the PN-EN 13823 test (Single Burning Item, SBI). Research confirmed that the addition of polyhydric phenol allows for reducing the heat of combustion, as determined by the (FIGRA) index, to approx. 50%, while the maximum heat release rate (HRR), which is of great importance in real fire conditions and relates to a real increase in flame retardancy, was reduced by approx. 30%.
The test results are presented in Table 1.

The research also demonstrated that the use of polyester polyols according to the method of the invention for the manufacture of products, e.g. polyurethane foam, allows for obtaining a thicker, harder char layer, which is of importance for all types of large-scale flammability testing of materials, as well as for retaining thermal insulation in case of actual fire, as it prevents further flame transmission. The char layer provides a fire barrier, it prevents brittle and thin charred layer from falling off as a result of the blast, thus preventing further layers of burning material from being exposed. Accordingly, the mechanism observed is of great importance for improving the flame retardancy properties of the insulation.

The method according to the invention has been disclosed in the embodiments (implementation using two reactors of different capacity), which, however, do not constitute a limitation for other possible embodiments thereof.

### Example 1

2700 kg of side product from the cyclohexane oxidation process was placed in the reactor and gradually heated at a rate of 10°C/hour to 130°C. 358 kg of diethylene glycol and 57 kg of resorcin were then added. This was further heated at a rate of 10°C/h to reach the temperature of 185°C. Upon reaching the acid value of approx. 80 mg KOH/g, 66 kg of pentaerythritol and 491 kg of glycerine were added, and heating was continued until reaching the acid value of 2.5 mg KOH/g. A polyol with hydroxyl number 346 mg KOH/g and viscosity of 4535 mPas was obtained.

**Example 2**

13500 kg of side product from cyclohexane oxidation process was loaded into the reactor, nitrogen flow was set at 5 l/min, and this was heated to 120°C. 808 kg of ethylene glycol and 420 kg diethylene glycol and 192 kg catechol were then added. This was further heated at a rate of 10°C/hour to 190°C. One hour after further heating, vacuum was gradually adjusted to -90Kpa. 330 kg of pentaerythritol, 2718 kg of glycerine, and 420 kg of diethylene glycol and 808 kg of ethylene glycol were then added. The product was heated in the temperature of 190°C and under vacuum, with the mixer and nitrogen flow on, until reaching the acid value of 2.5 mg KOH/g. A polyester polyol with hydroxyl number 359 mg KOH/g and viscosity of 4687 mPas was obtained.

### Example 3

9060 kg of side product from the process of cyclohexane oxidation was placed in the reactor, heating and nitrogen flow were started. At 50°C, 850 kg of resorcin, 6290 kg of phthalic anhydride and 9240 kg of diethylene glycol were added. It was further heated to a temperature of 130°C. Another 6300 kg of phthalic anhydride and 9240 kg of diethylene glycol and 580 kg of glycerine and 5.9 kg of titanium tetrabutanolate catalyst were added. The product was further heated to reach the temperature of 200°C, and then the product was heated at this temperature to reach the acid value of 2 mg KOH/g, after which the reactor content was cooled to the temperature of 80 °C and 1-chloro-2-propyl phosphate flame retardant was added in the amount of 2580 kg. A polyester with hydroxyl number 245 mg KOH/g and viscosity of 4205 mPas was obtained.

### Example 4

1500 kg of side product from the cyclohexane oxidation process, 1000 kg of diethylene glycol and 1200 kg of ethylene polyglycol PEG400 were loaded into the reactor. Nitrogen flow was set, and the mixer was started, after which the whole was heated to the temperature of 190°C. 0.6 kg of titanium tetrabutanolate catalyst was added and heating was continued. After reaching the acid value of 10 mg KOH/g, 330 kg of catechol was added, and heating was continued until the acid value of 2.8 mg KOH/g was reached. A polyester polyol with hydroxyl number 244 mg KOH/g and viscosity of 700 mPas was obtained.

### Example 5

1780 kg of side product from the cyclohexane oxidation process was loaded into the reactor and heating started with the mixer on to 130°C. When water content fell below 5%, the temperature was reduced to 110°C, and 650 kg of diethylene glycol, 820 kg of bisphenol A and 750 kg of cashew shell oil were added. This was heated to 180°C at the rate of 15-20°C/hour and further heated at 180°C to reach the acid value of 2.0 mg KOH/g. A polyol with hydroxyl number 266 mg KOH/g and viscosity of 4750 mPas was obtained.

**TABLE 1**

| Item | Description of material | Fire growth rate index FIGRA | Smoke growth rate index SMOGRA | Total smoke production in 600s TSP 600s | Max. heat release rate HRR | Lateral fire spread to the edge LFS >edge | Falling drops and particles |
|---|---|---|---|---|---|---|---|
| | | [W/s] | [m²/s²] | [m²] | [kW/m²] | [yes/no] | [d0/d1] |
| 1. | Standard polyester based on products of oxidation of cyclohexane | 2806 | 863.2 | 552.6 | 144.2 | NO | d0 |
| 2 | Polyester based on products of oxidation of cyclohexane with catechol | 1544 | 847.6 | 798.3 | 96.42 | NO | d0 |
| 3 | Polyester based on products of oxidation of cyclohexane with resorcin | 1414 | 521.4 | 532.0 | 63.09 | NO | d0 |
| 4. | Polyester based on products of oxidation of cyclohexane with bisphenol | 2707 | 728.6 | 640.8 | 119.2 | NO | d0 |
| 5. | Polyester based on products of oxidation of cyclohexane with hydroquinone | 2537 | 750.9 | 525.3 | 124.8 | NO | d0 |

## Claims

1. The method for obtaining high flame retardancy polyester polyols using as raw material a side stream from the process of oxidation of cyclohexane subjected to the process of distillation of the volatile parts and water, and then to the process of esterification and polycondensation, where the side streams comprises at least 50% w/w of bifunctional compounds with COOH or OH groups; 5-25% w/w of monocarboxylic compounds, where the remainder are ketones, aldehydes, esters, alcohols, cyclic compounds and derivatives of said groups of compounds and acids, in particular adipic acid, 6-hydroxycaproic acid, 5-oxohexanoic acid, valeric acid, butyric acid, acetic acid, caproic acid, formic acid, succinic acid and propionic acid, **characterized In that** the side product from the cyclohexane oxidation process in the amount of 10 to 80% w/w is subjected to atmospheric distillation at 130 to 185°C to distil some of the volatile compounds and water to a level below 3% w/w, after which at least one polyhydroxyl compound or a mixture of polyhydroxyl compounds is added, containing at least two hydroxyl groups in the molecule, in an amount of 10 to 25% w/w, and at least one aromatic compound or a mixture of aromatic compounds is added that are phenols with at least one aromatic ring in the molecule and/or with aliphatic substitutes, in an amount of 0.5% to 20% w/w and also from 0.1 to 50% w/w of bicarboxylic aliphatic and/or aromatic acids and/or anhydrides thereof, as well as from 0.1 to 15% w/w of vegetable oils, and/or from 0.1 to 15% w/w of fatty acids derived from vegetable oils and the whole is subjected to the process of esterification and polycondensation by heating at the temperature of 160-220°C under atmospheric pressure or preferably a pressure reduced to 90kPa until an acid value of 0 to 5 mg KOH/g and a hydroxyl value of 20 to 400 mg KOH/g is obtained.

2. The method according to claim 1, **characterised in that** the polyhydroxyl compounds comprising at least two hydroxyl moieties in the molecule used are ethylene glycol and/or diethylene glycol and/or 1,4-butanediol and/or 1,2-propanediol and/or 1,3-propanediol and/or 1,6-hexanediol and/or pentaerythritol and/or glycerol, wherein each of these polyhydroxyl compounds may be used separately or in a mixture up to 100% w/w of their total amount used in the process, and the phenols used are bisphenol and/or catechol and/or resorcin and/or hydroquinone with one or more aromatic rings and/or aliphatic substitutes, wherein each of these phenols may be used separately or in a mixture up to 100% w/w of their total amount used in the process.

## Patentansprüche

1. Verfahren zur Herstellung von Polyesterpolyolen mit hoher Flammhemmung unter Verwendung eines Nebenstroms aus dem Cyclohexan-Oxidationsprozess als Ausgangsmaterial, wobei der Nebenstrom einem Destillationsprozess zur Abtrennung flüchtiger Bestandteile und von Wasser und anschließend einem Veresterungs- und Polykondensationsprozess unterzogen wird, wobei der Nebenstrom mindestens 50 Gew.-% bifunktionelle Verbindungen mit COOH- oder OH-Gruppen sowie 5 bis 25 Gew.-% Monocarbonsäureverbindungen umfasst und der Rest aus Ketonen, Aldehyden, Estern, Alkoholen, cyclischen Verbindungen und Derivaten der genannten Verbindungsgruppen und Säuren besteht, insbesondere aus Adipinsäure, 6-Hydroxycapronsäure, 5-Oxohexansäure, Valeriansäure, Buttersäure, Essigsäure, Capronsäure, Ameisensäure, Bernsteinsäure und Propionsäure, sowie unter Verwendung aromatischer und aliphatischer Verbindungen, **dadurch gekennzeichnet, dass** das Nebenprodukt aus dem Cyclohexan-Oxidationsprozess in einer Menge von 10 bis 80 Gew.-% einer atmosphärischen Destillation bei 130 bis 185 °C unterzogen wird, um einen Teil der flüchtigen Verbindungen und des Wassers bis auf einen Gehalt von weniger als 3 Gew.-% abzudestillieren, woraufhin mindestens eine Polyhydroxyverbindung oder ein Gemisch von Polyhydroxyverbindungen, die mindestens zwei Hydroxylgruppen im Molekül enthalten, in einer Menge von 10 bis 25 Gew.-% zugegeben wird, ferner mindestens eine aromatische Verbindung oder ein Gemisch aromatischer Verbindungen, bei denen es sich um Phenole mit mindestens einem aromatischen Ring im Molekül und/oder mit aliphatischen Substituenten handelt, in einer Menge von 0,5 bis 20 Gew.-% zugegeben wird, sowie 0,1 bis 50 Gew.-% aliphatische und/oder aromatische Dicarbonsäuren und/oder deren Anhydride, ferner 0,1 bis 15 Gew.-% pflanzliche Öle und/oder 0,1 bis 15 Gew.-% aus pflanzlichen Ölen gewonnene Fettsäuren zugegeben werden, und das Ganze durch Erhitzen auf eine Temperatur von 160 bis 220 °C unter Atmosphärendruck oder vorzugsweise bei einem auf 90 kPa verminderten Druck dem Veresterungs- und Polykondensationsprozess unterzogen wird, bis eine Säurezahl von 0 bis 5 mg KOH/g und eine Hydroxylzahl von 20 bis 400 mg KOH/g erreicht wird.

2. Verfahren nach Anspruch 1, **dadurch gekennzeichnet, dass** als Polyhydroxyverbindungen, die mindestens zwei Hydroxylgruppen im Molekül aufweisen, Ethylenglykol und/oder Diethylenglykol und/oder 1,4-Butandiol und/oder 1,2-Propandiol und/oder 1,3-Propandiol und/oder 1,6-Hexandiol und/oder Pentaerythrit und/oder Glycerin verwendet werden, wobei jede dieser Polyhydroxyverbindungen einzeln oder in einem Gemisch in einer Menge von bis zu 100 Gew.-% ihrer im Verfahren eingesetzten Gesamtmenge verwendet werden kann, und dass als Phenole Bisphenol und/oder Catechol und/oder Resorcin und/oder Hydrochinon mit einem oder mehreren aromatischen Ringen und/oder aliphatischen Substituenten verwendet werden, wobei jedes dieser Phenole einzeln oder in einem Gemisch in einer Menge von bis zu 100 Gew.-% ihrer im Verfahren eingesetzten Gesamtmenge verwendet werden kann.

## Revendications

1. Procédé d'obtention de polyols de polyester à haute résistance au feu, utilisant comme matière première un flux secondaire issu du procédé d'oxydation du cyclohexane, soumis à un procédé de distillation des fractions volatiles et de l'eau, puis à un procédé d'estérification et de polycondensation, le flux secondaire comprenant au moins 50 % p/p de composés bifonctionnels comportant des groupes COOH ou OH ; 5 à 25 % en poids de composés monocarboxyliques, le reste étant constitué de cétones, d'aldéhydes, d'esters, d'alcools, de composés cycliques et de dérivés desdits groupes de composés et d'acides, en particulier l'acide adipique, l'acide 6-hydroxycaproïque, l'acide 5-oxohexanoïque, l'acide valérique, l'acide butyrique, l'acide acétique, l'acide caproïque, l'acide formique, l'acide succinique et l'acide propionique, ainsi que des composés aromatiques et aliphatiques, **caractérisé en ce que** le sous-produit issu du procédé d'oxydation du cyclohexane, en une quantité de 10 à 80 % p/p, est soumis à une distillation atmosphérique à une température comprise entre 130 et 185 °C afin d'éliminer une partie des composés volatils et de l'eau jusqu'à une teneur inférieure à 3 % p/p, après quoi on ajoute au moins un composé polyhydroxylé ou un mélange de composés polyhydroxylés, contenant au moins deux groupes hydroxyles dans la molécule, en une quantité de 10 à 25 % p/p, et on ajoute au moins un composé aromatique ou un mélange de composés aromatiques, qui sont des phénols comportant au moins un cycle aromatique dans la molécule et/ou des substituants aliphatiques, en une quantité comprise entre 0,5 % et 20 % p/p, ainsi que de 0,1 à 50 % p/p d'acides bicarboxyliques aliphatiques et/ou aromatiques et/ou de leurs anhydrides, ainsi que de 0,1 à 15 % p/p d'huiles végétales, et/ou de 0,1 à 15 % p/p d'acides gras dérivés d'huiles végétales, et l'ensemble est soumis à un procédé d'estérification et de polycondensation par chauffage à une température comprise entre 160 et 220 °C sous pression atmosphérique ou, de préférence, sous une pression réduite à 90 kPa, jusqu'à obtention d'un indice d'acide compris entre 0 et 5 mg de KOH/g et d'un indice d'hydroxyle compris entre 20 et 400 mg de KOH/g.

2. Procédé selon la revendications 1, caractérisée le fait queles composés polyhydroxylés comprenant au moins deux groupements hydroxyle dans la molécule utilisée sont l'éthylène glycol et/ou le diéthylène glycol et/ou le 1,4-butanediol et/ou le 1,2-propanediol et/ou le 1,3-propanediol et/ou le 1,6-hexanediol et/ou le pentaérythritol et/ou le glycérol, chacun de ces composés polyhydroxylés pouvant être utilisé séparément ou en mélange jusqu'à 100 % p/p de leur quantité totale utilisée dans le procédé, et les phénols utilisés sont le bisphénol et/ou le cathéchol et/ou la résorcine et/ou l'hydroquinone comportant un ou plusieurs cycles aromatiques et/ou des substituants aliphatiques, chacun de ces phénols pouvant être utilisé séparément ou en mélange jusqu'à 100 % p/p de leur quantité totale utilisée dans le procédé.
